# EUROPÄISCHE PATENTSCHRIFT

(11) **EP 1 464 634 B1**
(45) Veröffentlichungstag und Bekanntmachung des Hinweises auf die Patenterteilung: **15.06.2011**
(21) Anmeldenummer: 04006997.3
(22) Anmeldetag: 24.03.2004
(51) Int. Cl.: C04B 35/52

(54) **Carbidkeramik-Werkstoff**
Carbonaceous ceramic material
Matériau céramique carboné

(30) Priorität: 04.04.2003 DE 10315737
(43) Veröffentlichungstag der Anmeldung: 06.10.2004
(73) Patentinhaber: SGL Carbon SE, 65203 Wiesbaden (DE)
(72) Erfinder: Benitsch, Bodo, 86647 Buttenwiesen (DE); Gruber, Udo, 86356 Neusäss (DE); Pfitzmaier, Eugen, 86672 Thierhaupten (DE)

(56) Entgegenhaltungen:
- EP-A- 1 273 818
- DE-A1- 19 727 587
- DE-A1- 19 953 259

## Beschreibung

Die Erfindung betrifft einen Carbidkeramik-Werkstoff sowie ein Verfahren zu seiner Herstellung und seine Anwendung insbesondere als Konstruktionswerkstoff für Gebilde mit geringem Gewicht und hoher Steifigkeit.

Bestimmte Bauteile, insbesondere für Tragkörper, sollen sich neben einer hohen Steifigkeit und Temperaturbeständigkeit auch durch eine niedrige Dichte und damit ein niedriges Gewicht des Bauteils auszeichnen. Darüber hinaus wird insbesondere in Anwendungen für die Raumfahrt eine gute Temperaturwechselbeständigkeit verbunden mit einem niedrigen Wärmeausdehnungskoeffizienten gefordert. Neben einem niedrigen Wärmeausdehnungskoeffizienten ist es bei Erwärmen und Abkühlen insbesondere von großen Körpern erwünscht, dass die dabei eintretenden Längenänderungen gleichmäßig in allen Raumrichtungen sind. Es ist weiter erwünscht, dass die mechanischen Eigenschaften (Zug- und Biegefestigkeit und die entsprechenden Moduln) von der Richtung unabhängig sind oder nur möglichst geringe Änderungen in Abhängigkeit von der Richtung der Beanspruchung zeigen. Körper, in denen die physikalischen (insbesondere auch die mechanischen) Eigenschaften keine Abhängigkeit von der Raumrichtung zeigen, nennt man isotrop.

Im folgenden werden unter Körpern mit niedriger Anisotropie solche verstanden, in denen die größte Abweichung einer physikalischen Größe in einer Raumrichtung, bezogen auf den niedrigsten Wert dieser Größe, der in einer bestimmten Raumrichtung in diesem Körper gemessen wird, höchstens 20 %, bevorzugt höchstens 10 %, und insbesondere höchstens 5 % beträgt.

Aus der DE-A 32 46 755 ist bekannt, dass man hochfeste Verbundmaterialien, bestehend aus verschiedenen Laminatschichten in Kombination mit Zellkern- oder Wabenschichten, in Leichtbauweise herstellen kann. Als Rohstoffe kommen dabei kunstharzgetränkte Vliese oder Gewebe aus Papier, Kunststoff, Folie, Glasgewebe, Carbon-Faservliese oder Polyimid zum Einsatz, wobei der Zellkern oder die Wabenschicht eine bessere Stabilität und eine erhöhte Biegesteifigkeit des Formkörpers gewährleisten sollen. Durch die Laminatstruktur wird eine unerwünschte Anisotropie erzeugt.

Aus der DE-A 43 29 551 ist ein Reflektor sowie ein Verfahren zu dessen Herstellung bekannt, der einen Trägerkörper und einen mit diesem fest verbundenen Belag aus Silicium oder aus Siliciumcarbid oder aus einer Mischung aus beiden umfasst, wobei der Trägerkörper aus porösem, mindestens teilweise carbidisiertem Kohlenstoff und gegebenenfalls eingelagertem Silicium besteht. In diesem Bauteil werden als Grundkörper faserverstärkte CFC-oder CMCoder Kohlenstoff-Waben-Composites eingesetzt. Diese Rohlinge werden durch Infiltration mit einer Silicium-Schmelze behandelt, wobei mindestens ein Teil des Kohlenstoffs zu Siliciumcarbid umgesetzt wird. Zwar werden beliebige Grundkörper erwähnt, sowohl auf Lang- als auch auf Kurzfaser-Basis, wobei die Fasern orientiert oder unorientiert sein können. In den Beispielen werden jedoch nur Körper auf Basis von Geweben (Prepregs mit Satinbindung) und mit Kohlenstoff-Kurzfasern verstärkte Vollkörper beschrieben. Während die mit Geweben verstärkten Köper auch nach der Silicierung stark anisotrop sind, wobei sich die Eigenschaften in der Gewebe-Eben und senkrecht dazu deutlich unterscheiden, was insbesondere bei der Wärmeausdehnung kritisch sein kann und beispielsweise zu Schrumpfrissen führt, sind die durch Kurzfasern verstärkten isotropen Körper bezüglich ihre Steifigkeit nicht befriedigend.

EP1273818 offenbart eine Reibschicht aus einem C/SiC Carbidkeramik-Werkstoff, wobei in dem Werkstoff der Massenanteil an Silizium unterhalb von 30 %, und der Massenanteil an Siliziumcarbid oberhalb von 70% beträgt und das restliche Material überwiegend aus Kohlenstoff besteht. Als Ausgangsmaterialien werden Kohlenstofffaserbündel oder auch Kurzfasern in Form von Filzen, mit einer mittleren Länge von bis zu 1 mm benutzt. Nach der Pyrolysierung und Siliziuminfiltration ist es nicht klar in welche Form das restliche Kohlenstoff vorliegt. Diese C/SiC Carbidkeramik-Reibschicht zeigt keine ausreichende Isotropie.

Der Stand der Technik lehrt mithin, dass ausreichende Steifigkeit nur durch Anisotropie und damit Schrumpfrisse insbesondere bei cyclischer Wärmebeanspruchung erreicht werden kann, während bei isotropen Kurzfaser-verstärkten Materialien die Steifigkeit nicht den Anforderungen genügt.

Es besteht daher die Aufgabe, solche keramischen Werkstoffe bereitzustellen, deren Anisotropie gering genug ist, um bei cyclischer Wärmebeanspruchung nicht zu lokal unterschiedlicher Verformung oder Rissbildung zu führen, und die jedoch steif genug sind, um sie beispielsweise als Träger für Reflektoren einsetzen zu können, wobei durch die Steifigkeit gegen Verbiegen die Abbildungsfehler begrenzt werden. Aus den maximal tolerierbaren Abbildungsfehlem ergibt sich eine untere Schranke für den Biege-Elastizitätsmodul von ca. 200 GPa.

Gemäss dem Stand der Technik können Trägerstrukturen aus mit Silicium infiltrierten Kohlenstofffilzen gebildet werden, indem Kohlenstofffilze mit Harzen oder Pech imprägniert werden, mehrere Lagen solcher imprägnierter Kohlenstofffilze übereinander gestapelt und gemeinsam verpresst und anschließend gehärtet werden, der so gebildete mehrlagige dicke Grünkörper unter Ausschluss von oxydierenden Agenzien bei erhöhter Temperatur carbonisiert und anschließend durch Infiltration und Reaktion mit Silicium zumindest teilweise in Siliciumcarbid umgewandelt wird. An den so gewonnenen Körpern ist jedoch die Struktur, die durch das Stapeln der Filzschichten erzeugt wird, stets nicht nur sichtbar, sondern sie äußert sich auch in einer deutlichen Anisotropie der Festigkeit und der Wärmeausdehnung sowie durch Inhomogenität innerhalb des Körpers. Auch beim Pressformen von Harzmassen oder Pechen, die Kurzfasern aus Kohlenstoff mit mittleren Faserlängen von ca. 5 bis 20 mm enthalten, lässt sich eine derartige Anisotropie feststellen, die sich auch bei den daraus hergestellten carbonisierten und silicierten Formkörpern zeigt. Überraschenderweise wurde festgestellt, dass Formkörper, die Kohlenstoff in Form von gemahlenen Filzen enthalten, eine sehr geringe Anisotropie bei gleichzeitig guter Festigkeit aufweisen.

Die Erfindung betrifft daher einen Carbidkeramik-Werkstoff, der beispielsweise als Träger für Reflektoren geeignet ist, der eine Dichte von 2400 bis 3000 kg/m³ aufweist und der Phasen aus Kohlenstoff, carbidbildenden Elementen und Carbiden enthält, wobei in dem Werkstoff der Massenanteil des Kohlenstoffs 1 bis 59 %, bevorzugt 2 bis 50 %, und insbesondere 5 bis 40 % beträgt, der Massenanteil an carbidbildenden Elementen 1 bis 30 %, bevorzugt 3 bis 25 %, und insbesondere 5 bis 20 %, und der Massenanteil an Carbiden 40 bis 98 %, bevorzugt 50 bis 95 %, und insbesondere 55 bis 90 % beträgt, und die Summe der Massenanteile der genannten Bestandteile 100 % ist, wobei mindestens ein Massenanteil von 30 % des Kohlenstoffs in Form von gemahlenen, vor dem Mahlen als Filz gebundenen Kohlenstofffasern ist mit einer mittleren Länge von bis zu 10 mm.

Die Erfindung betrifft weiter ein Verfahren zur Herstellung derartiger Carbidkeramik-Werkstoffe, umfassend die Schritte
- Zerkleinern von Filzen auf Basis von Kohlenstoff- oder Graphitfasern oder deren Vorläufern, die gegebenenfalls mit Kunstharzen, Pechen oder anderen Stoffen, die beim Erhitzen in Abwesenheit von oxydierenden Agenzien Kohlenstoff bilden, imprägniert, gegebenenfalls im Fall der Verwendung von Kunstharzen gehärtet, und anschließend durch Erhitzen auf eine Temperatur von 750 bis 1300 °C unter Ausschluss von oxydierenden Agenzien carbonisiert wurden, auf eine Teilchengröße von maximal 10 mm,
- Mischen des zerkleinerten carbonisierten Filzimprägnats mit carbonisierbaren Kunststoffen und/oder Kunstharzen und/oder Pechen und/oder carbidbildenden Stoffen,
- Pressen der im vorigen Schritt hergestellten Mischung zu einem Formkörper,
- gegebenenfalls Härten des Formkörpers im Fall der Verwendung von Kunstharzen,
- Carbonisieren des Formkörpers durch Erhitzen unter Ausschluss von oxydierenden Agenzien bei Temperaturen von 750 bis 1300 °C
- gegebenenfalls Imprägnieren des im vorigen Schritt gebildeten porösen Körpers mit carbonisierbaren Stoffen ausgewählt aus Pechen, Kunstharzen und Kunststoffen und nachfolgendes erneutes Carbonisieren gemäss dem Verfahren des vorigen Schritts, wobei dieser Schritt des Imprägnierens und Carbonisierens auch mehrfach hintereinander durchgeführt werden kann,
- gegebenenfalls Graphitieren des carbonisierten Körpers durch Erhitzen unter Ausschluss von oxydierenden Agenzien bei 1300 bis 3000 °C
- Infiltrieren des carbonisierten oder graphitierten Körpers mit der Schmelze oder dem Dampf eines carbidbildenden Elements, bevorzugt Silicium, oder einer Mischung von zwei oder mehreren solcher Elemente, bevorzugt enthaltend Silicium und mindestens ein weiteres Element, bei einer Temperatur oberhalb der Schmelztemperatur bzw. der Verdampfungstemperatur des betreffenden Elements oder der betreffenden Mischung von carbidbildenden Elementen, und Reaktion zumindest eines Teils des Kohlenstoffs in dem carbonisierten oder graphitierten Körper mit dem carbidbildenden Element oder mindestens einem der carbidbildenden Elemente unter Bildung des betreffenden Carbids.

Die Erfindung betrifft weiter die Verwendung der erfindungsgemäßen Carbidkeramik-Werkstoffe zur Herstellung von Bauteilen mit hoher Steifigkeit und niedriger Anisotropie, insbesondere von Trägern für Reflektoren oder Spiegel.

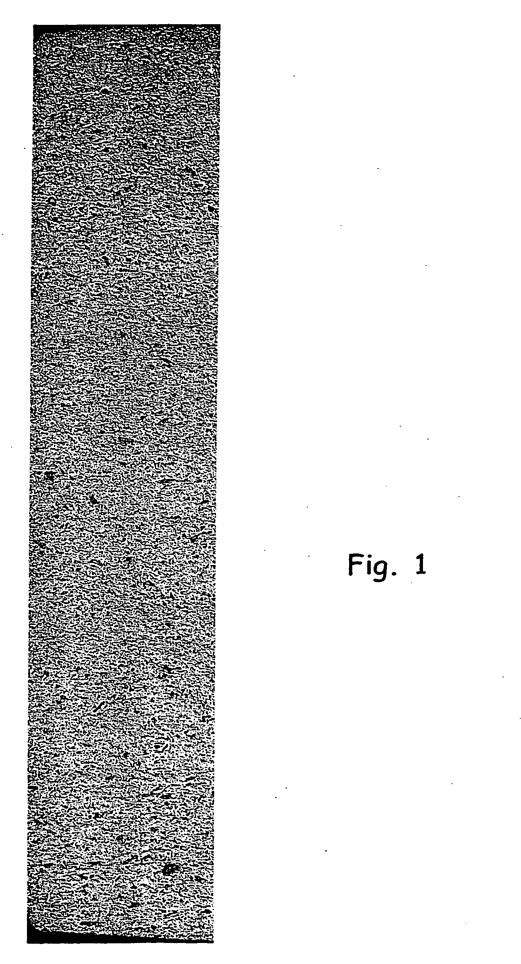

Die Vorteile des Werkstoffs gemäss der Erfindung wird durch die Figur erläutert. Dabei zeigt die
- Fig. 1: eine mikroskopische Aufnahme eines Anschliffs des erfindungsgemäßen Carbidkeramik-Werkstoffs in ca. 8facher Vergrößerung.

Die homogene Struktur des erfindungsgemäßen Carbidkeramik-Werkstoffs, der insbesondere keine lokalen Häufungen von Phasen aus den carbidbildenden Metallen enthält, wird aus dem Schliffbild (Fig. 1) deutlich. In diesem Schliffbild sind zwar regellos verteilte Poren (auf dem Bild schwarz) zu erkennen, jedoch keine zusammenhängenden Phasen von Silicium (im Bild weiß). Bei Körpern, die aus mehreren Lagen zusammengesetzt werden, zeigen sich durch diese Struktur stets lokale Häufungen der carbidbildenden Metalle, da wahrscheinlich beim Pressen oder anderweitigen Verbinden der Lagen keine homogene Druckverteilung in Inneren des Körpers herrscht.

Bevorzugt ist das carbidbildende Element Silicium oder eine Mischung von Elementen, die Silicium enthält, der Werkstoff enthält bevorzugt Siliciumcarbid oder eine Mischung von Carbiden, die Siliciumcarbid enthält.

Bevorzugt enthält der Carbidkeramik-Werkstoff Kohlenstoff in Form von zermahlenen Fasern, deren Länge bis zu 8 mm, bevorzugt maximal 5 mm, und insbesondere maximal 3 mm beträgt, und deren Durchmesser 2 bis 20 µm, bevorzugt 4 bis 18 µm, und besonders bevorzugt 6 bis 16 µm ist.

Derartige zermahlene Fasern sind erhältlich durch Zerkleinern von gegebenenfalls mit Pechen und/oder Harzen, insbesondere Phenolharzen gebundenen carbonisierten Filzen aus Kohlenstoff- oder Graphit-Fasern oder deren uncarbonisierten Vorläufern auf eine maximale Länge von 10 mm, bevorzugt auf maximal 6 mm, und insbesondere auf maximal 4 mm, insbesondere durch Schneiden der genannten Filze auf einer Schneidmühle mit einem Siebeinsatz der entsprechenden Lochweite. Bevorzugt wird zerkleinerter Filz eingesetzt, der durch Nadeln gebunden ist. Es ist ebenfalls möglich, Kohlenstoff einzusetzen, der aus zerkleinertem, durch Walken gebundenen Filz gewonnen ist. Es ist besonders bevorzugt, den Filz mit Lösungen von Phenolharzen, insbesondere von Resolen, zu imprägnieren und dadurch zu binden.

Der Werkstoff enthält bevorzugt Phasen aus Siliciumcarbid, Silicium und unreagiertem Kohlenstoff in den genannten Mengen. Werden Mischungen aus zwei oder mehr carbidbildenden Elementen eingesetzt, so ist es bevorzugt, dass der Massenanteil von Silicium, bezogen auf die Masse der carbidbildenden Elemente, mindestens 40 % beträgt. Ebenso ist es bevorzugt, dass der Massenanteil an Siliciumcarbid, bezogen auf die Masse der Carbide, mindestens 40 % beträgt, besonders bevorzugt mindestens 50 %, und insbesondere mindestens 60 %.

Bevorzugt wird der Kohlenstofffilz durch Carbonisieren von Cellulose-Filzen, Filzen aus Polyacrylnitril-Fasern oder Filzen aus Pechfasern gebildet. Die Bindung des Filzes wird dabei bevorzugt in der noch nicht carbonisierten Form vorgenommen. Es ist jedoch erfindungsgemäß auch möglich, anstelle oder in Mischung mit dem Kohlenstofffilz auch Wolle aus Kohlenstoff einzusetzen, die beispielsweise durch Carbonisieren von Cellulose-Fasern gewonnen wird.

Es ist auch möglich, anstelle des Filzes aus Kohlenstofffasern Filze aus Vorläufern von Kohlenstofffasern einzusetzen, also Fasern, die bei Erhitzen in Abwesenheit von oxydierenden Agenzien Kohlenstofffasern bilden, beispielsweise Filze aus Polyacrylnitrilfasern, aus Cellulose- oder Wollfasern, die erst nach dem Verfilzen und Zerkleinern carbonisiert und gegebenenfalls graphitiert werden. Die Vorläufer-Fasern können allgemein natürliche oder synthetische Fasern sein, die während des Carbonisierens jedoch ihre Faserstruktur erhalten.

Es ist auch möglich, den Filz durch Abscheidung von Kohlenstoff aus der Gasphase (CVD, beispielsweise beschrieben in der DE-C 39 33 039) oder durch Imprägnieren mit einem carbonisierbaren Bindemittel und Carbonisieren des Imprägnats, wobei beide alternativen Verfahren bevorzugt von einem Graphitierungsschritt gefolgt werden, wie beispielsweise beschrieben in der DE-A 197 10 105, so zu modifizieren, dass die Kohlenstofffasern durch die auf ihnen abgeschiedene Schicht vor einem Angriff beim Silicieren geschützt werden.

Der zerkleinerte Filz kann mit (thermoplastischen) Kunststoffen oder mit Kunstharzen oder mit Pechen oder mit solchen Polymeren gebunden werden, die beim Erhitzen Siliciumcarbid bilden; bevorzugt werden Phenolharze eingesetzt, ausgewählt aus Novolaken und Resolen, die als Pulver oder als Lösung mit dem Filz gemischt werden und (gegebenenfalls nach Trocknen) als Mischung in eine Pressform gefüllt werden.

Nach dem Pressen bei erhöhter Temperatur (bis zu 200 °C) wird der Pressling aus der Form genommen, gegebenenfalls gehärtet und durch Erhitzen unter inerter Atmosphäre carbonisiert. Es ist bevorzugt, bei der Formung den Druck ebenfalls möglichst wenig anisotrop aufzubringen, dies ist beispielsweise durch Anpassen der Geometrie der Pressform oder durch isostatisches Pressen möglich. Gegebenenfalls wird der durch das Carbonisieren poröse Pressling mindestens einmal mit einer dünnflüssigen Schmelze oder Lösung eines Kunstharzes oder einem Pech imprägniert, wobei das Imprägnierungsmittel in dem nachfolgenden weiteren Carbonisierungsschritt zu Kohlenstoff abgebaut wird, der die Poren mindestens teilweise füllt. Der Schritt des Imprägnierens und nachfolgenden Carbonisierens kann mehrmals wiederholt werden, bei dreimaliger Imprägnierung ist bereits eine Porosität von weniger als 5 % des Volumens des Formkörpers erreichbar. Es ist weiter möglich, den Formkörper abschließend auf eine Temperatur im Bereich von 1300 bis zu 3000 °C zu erhitzen, wobei sich der Kohlenstoff zu einem Anteil von mindestens 50 % zu Graphit umwandelt.

Der poröse Kohlenstoff- oder Graphitkörper kann anschließend durch Behandeln mit dem Dampf oder der Schmelze mindestens eines Elements, das mit Kohlenstoff Carbide bildet, in einen Körper überführt werden, der mindestens anteilsweise carbidische Phasen in der Matrix aufweist. Bevorzugt wird als carbidbildendes Element Silicium eingesetzt oder eine Mischung von Elementen, die Silicium enthält, wobei sich Siliciumcarbid oder eine Mischung von Carbiden bildet, die Siliciumcarbid enthält. Bevorzugt wird Silicium oder Mischungen, die Silicium enthalten.

Dazu wird der Körper mit einem Pulver, mit Granulaten oder Formkörpern enthaltend das oder die Infiltrationselemente überschichtet oder er wird, bevorzugt über poröse Kohlenstoffkörper oder poröse Siliciumcarbid-Körper, die als Dochte wirken, mit einer Schmelze der Infiltrationselemente in Kontakt gebracht, wobei es bevorzugt ist, diese Schmelze von unten zuzuführen, so dass die Schmelze in dem zu infiltrierenden Formkörper durch Kapillarwirkung aufsteigt.

Erfindungsgemäß kann auch eine sogenannte Dampfinfiltration stattfinden. Dabei werden die porösen Körper bei einer Temperatur, die mindestens 150 K über der Schmelztemperatur und mindestens 50 K unter der Siedetemperatur des Infiltrationselements oder der Mischung der Infiltrationselemente liegt, einem Gasstrom ausgesetzt, der dies Element oder diese Elemente enthält mit einem Partialdruck von mindestens 10 hPa und maximal 900 hPa. Im Fall von Silicium beispielsweise ist es bevorzugt, bei Temperaturen zwischen 1600 °C und 2300 °C zu arbeiten.

Die Dichte der Materialien beträgt im CFK-Zustand (der Körper enthält die gemahlenen Filzfasern und das gehärtete Harz) üblicherweise ca. 900 bis 1000 kg/m³ (0,9 bis 1 g/cm³), im carbonisierten Zustand ("CFC", der poröse Körper enthält die gemahlenen Filzfasern und den durch Carbonisieren aus dem Harz gebildeten Kohlenstoff) ist die Dichte üblicherweise 700 bis 800 kg/m³ (0,7 bis 0,8 g/cm³). Der mit Silicium infiltrierte Körper, in dem zumindest ein Teil des Kohlenstoffs zu Siliciumcarbid umgewandelt wurde, hat üblicherweise eine Dichte von 2550 bis 2850 kg/m³ (2,55 bis 2,85 g/cm³).

Das erfindungsgemäße Material hat eine nur sehr geringe Abhängigkeit der physikalischen Eigenschaften von der Richtung (geringe Anisotropie). So lassen sich aus dem Material Probekörper in unterschiedlichen Raumrichtungen und an unterschiedlichen Stellen eines größeren Körpers herausarbeiten, an denen der gemessene Biegemodul sich um maximal 30 % unterscheidet (gemessen in drei jeweils aufeinander senkrecht stehenden Raumrichtungen an entsprechend herauspräparierten Probekörpern). Bevorzugt ist die maximale Abweichung untereinander höchstens 20 %, und insbesondere höchstens 10 %. Bei der Messung der thermischen Leitfähigkeit an entsprechend präparierten Probekörpern beträgt die Abweichung der in x-, y- und z-Richtung entnommenen Körper maximal 20 %, bevorzugt maximal 10 % und insbesondere maximal 5 %. Der lineare Wärmeausdehnungskoeffizient, der sich bei den konventionell hergestellten Körpern aus mit Kohlenstofffasern verstärkten SiC-Keramik-Werkstoffen um ca. 20 bis zu ca. 30 % (gemessene Werte senkrecht zur Pressrichtung, bezogen auf den Wert in Pressrichtung) unterscheidet, ist bei den erfindungsgemäß hergestellten Werkstoffen deutlich einheitlicher: die Abweichung vom jeweils niedrigsten gemessenen Wert beträgt für die darauf senkrechten Raumrichtungen maximal 19 %, bevorzugt maximal 15 %, und insbesondere maximal 10 %.

Der mittlere lineare Wärmeausdehnungskoeffizient im Bereich von 1 bis 100 K beträgt bei dem erfindungsgemäßen Werkstoff maximal 3,5 × 10⁻⁶ K⁻¹, bevorzugt höchstens 2 × 10⁻⁶ K⁻¹, und insbesondere 1 × 10⁻⁶ K⁻¹.

Es ist besonders bevorzugt, dass die Formkörper in einem Zustand, der noch nicht die hohe Härte der Carbidkeramik aufweist so gestaltet werden, dass ihre Form möglichst genau der Form des herzustellenden Werkstücks oder Bauteils entspricht.

Die Erfindung wird durch die nachfolgenden Beispiele beschrieben.

### Beispiel 1

Ein Kohlenstoff-Filz (Dicke 10 mm, flächenbezogene Masse ca. 1,1 kg/m²) wurde mit einer Lösung von 300 g eines Phenolharzes (Resol, Typ O247DW01 der Fa. Bakelite AG) in 700 g Butanol getränkt. Der imprägnierte Filz wurde dann bei 150 °C in einem Trockenschrank getrocknet. Dabei wurde eine Massenzunahme von 32 % festgestellt. Der imprägnierte Filz wurde anschließend zunächst bei 220 °C gehärtet und danach durch Erhitzen unter Stickstoff bei 850 °C während vier Stunden carbonisiert. Der erhaltene spröde Körper wurde in einer Schneidmühle mit einem Rundloch-Sieb der Lochweite 10 mm gemahlen.

Das Mahlgut wurde mit Phenolharz-Pulver (Typ 8764F der Fa. Bakelite AG) im Massenverhältnis 1 : 1 gemischt und zu quaderförmigen Körpern mit der Abmessung 100 × 100 × 10 mm³ verpresst. Die Dichte der Presslinge betrug 940 kg/m³. Die Presslinge wurden bei 220 °C gehärtet und danach durch Erhitzen unter Stickstoff bei 850 °C während vierundzwanzig Stunden carbonisiert. Danach wurde eine Dichte von 770 kg/m³ bestimmt.

Die carbonisierten Körper wurden mit flüssigem Silicium unter vermindertem Druck bei ca. 1600 °C infiltriert. Die Dichte der silicierten Körper betrug nach Abkühlen auf Raumtemperatur 2630 kg/m³.

Die silicierten Körper wurden nach Abkühlen zersägt, die Struktur wurde elektronenmikroskopisch untersucht. Die Orientierung der verbliebenen Reste der gemahlenen Fasern war regellos.

An stabförmigen Probekörpern mit glatten Flächen, die in unterschiedlichen Richtungen mit der Länge des Stabes parallel zur Ebene der silicierten Körper aus diesen präpariert wurden, wurde der Biegemodul in Anlehnung an DIN 51 944 bestimmt. Dabei ergab sich ein mittlerer Wert von 213 GPa, die Standardabweichung von 8 jeweils in um 45° versetzten Richtungen aus den silicierten Körpern präparierten Probekörpern betrug 2,8 %.

### Beispiel 2:

Aus dem mit Phenolharz gemischten Mahlgut entsprechend der Mischung aus Beispiel 1 wurden würfelförmige Körper mit den Kantenmassen von jeweils 70 mm gepresst. Die gepressten Körper wurden wie im Beispiel 1 carbonisiert und siliciert. Aus den Würfeln wurden stabförmige Probekörper präpariert, die an verschiedenen Stellen entnommen wurden, wobei die Stabachse jeweils zu verschiedenen Würfelkanten parallel war. Die an diesen Probekörpern gemessenen Biege-Elastizitätsmoduln in Anlehnung an DIN 51 944 betrugen im Mittel 215 GPa, die Standardabweichung bei insgesamt 12 Messkörpern betrug 4,3 %.

### Beispiel 3 (Vergleich)

Kohlenstofffilz (Typ KFA5 der Fa. SGL Carbon AG, Dicke 5 mm, flächenbezogene Masse ca. 0,58 kg/m²) wurde in Stücke von jeweils 60 × 60 mm² geschnitten, mit einer Lösung eines Phenolharzes (Typ M1-0160 AT der Fa. Bakelite AG, gelöst in Butanol zu einer Lösung mit einem Massenanteil von 70 % Harz in 100 g der Lösung) getränkt, bei 150 °C getrocknet und noch zweimal nachimprägniert und getrocknet. Die imprägnierten Filzlagen wurden gestapelt (jeweils **12** Lagen), bei 170 °C und einem Druck von 15 bar verpresst und gehärtet. Aus den Presslingen wurden Probekörper mit den Abmessungen wie oben für den Biegeversuch herausgearbeitet. Es ergab sich bei 5 Stäben, die jeweils nur aus einer Lage bestanden und parallel zur Schichtung herausgearbeitet worden waren, ein Biegemodul von 230 GPa, mit einer Standardabweichung von 4 %. Probekörper, die mehrere Lagen des Filzes umfassten, zerbrachen bereits bei einer Biegespannung von durchschnittlich 168 MPa.

### Beispiel 4 (Vergleich)

Kohlenstoff-Kurzfasern mit einer Länge von 10 bis 30 mm wurden in einer Phenolharzsuspension aufgeschlämmt. Der Massenanteil der Fasern in der Suspension betrug 40 %. Die Suspension wurde in eine zylindrische Form mit einem Durchmesser von 150 mm und einer Höhe von 100 mm gefüllt. Bei 60 bis 70 °C wurden die im Phenolharz enthaltenen Lösungsmittel unter vermindertem Druck entfernt, anschließend wurde das Phenolharz bei ca. 180 °C gehärtet. Nach dem Entformen wurde der zylindrische CFK-Körper unter Ausschluss von Sauerstoff wie in Beispiel 1 carbonisiert.

Der erhaltene CFC-Körper mit quasi-isotropem Gefüge wies eine Dichte von 0,55 g/cm³ und eine Porosität (Volumenanteil) von etwa 70 % auf. Durch eine Graphitierung wie in Beispiel 1 beschrieben wurde die Reaktivität der verwendeten Kohlenstofffasern minimiert und der aus dem Phenolharz gebildete Matrix-Kohlenstoff zumindest teilweise in Graphit umgewandelt.

Aus dem zylindrischen porösen Körper wurden dann durch Fräsbearbeitung Körper herausgearbeitet, die etwa die Gestalt der Prüfstäbe hatten.

Diese wurden in einem Vakuumofen 50 Stunden lang bei 750 °C und bei einem Partialdruck von 2 hPa (2 mbar) unter Verwendung von Propan und Argon im Verhältnis 1:5 durch chemische Gasphasenabscheidung mit pyrolytischem Kohlenstoff infiltriert, bis ihre Dichte 0,90 g/cm³ betrug und ihre offene Porosität auf einen Volumenanteil von ca. 30 % abgenommen hatte.

Die Körper wurden dann in einer Hochtemperatur-Vakuumkammer in ein Graphitgefäß gestellt, dessen Boden mit geschmolzenem metallischen Silicium bedeckt war. Aufgrund der Kapillarkräfte stieg das geschmolzene Silicium in dem Rohling nach oben, wodurch die Poren fast ganz mit Silicium gefüllt wurden. Bei weiterer Temperatursteigerung auf etwa 1750 bis 1800 °C wurde ein Teil des metallischen Siliciums mit dem (pyrolytisch abgeschiedenen und durch Carbonisierung gebildeten) Kohlenstoff zu Siliciumcarbid umgesetzt.

Nach Abkühlung auf Raumtemperatur wiesen die Körper eine Dichte von 1,75 g/cm³ auf, wobei in der Matrix ein Massenanteil von ca. 20 % an unreagiertem, freien metallischen Silicium vorlag. Der an diesen Körpern gemessene Biegemodul betrug 192 GPa, die Standardabweichung bei 8 Körpern, die in verschiedenen Raumrichtungen aus den Rohlingen herauspräpariert waren, betrug 26 %.

Die Probekörper wurden in allen Fällen auf das erforderliche Maß mittels einer Schleifmaschine geschliffen.

## Patentansprüche

1. Carbidkeramik-Werkstoff mit einer Dichte von 2400 bis 3000 kg/m³, enthaltend Phasen aus Kohlenstoff, carbidbildenden Elementen und Carbiden, wobei in dem Werkstoff der Massenanteil des Kohlenstoffs 1 bis 59 %, der Massenanteil an carbidbildenden Elementen 1 bis 30 %, und der Massenanteil an Carbiden 40 bis 98 % beträgt, und die Summe der Massenanteile der genannten Bestandteile 100 % ist, wobei mindestens ein Massenanteil von 30 % des Kohlenstoffs in Form von gemahlenen, vor dem Mahlen als Filz gebundenen Kohlenstofffasern vorliegt mit einer mittleren Länge von bis zu 10 mm.

2. Carbidkeramik-Werkstoff nach Anspruch 1, **dadurch gekennzeichnet, dass** der mittlere lineare Wärmeausdehnungskoeffizient im Bereich von 1 bis 100 K maximal 3,5 × 10⁻⁶ K⁻¹ beträgt.

3. Carbidkeramik-Werkstoff nach Anspruch 1, **dadurch gekennzeichnet, dass** der in drei jeweils aufeinander senkrecht stehenden Raumrichtungen gemessene Biegemodul sich um maximal 30 % unterscheidet, bezogen auf den geringsten gemessenen Wert.

4. Carbidkeramik-Werkstoff nach Anspruch 1, **dadurch gekennzeichnet, dass** die thermische Leitfähigkeit gemessen in drei aufeinander senkrecht stehenden Raumrichtungen x, y und z um höchstens 20 %,bezogen auf den niedrigsten Wert, voneinander abweicht.

5. Carbidkeramik-Werkstoff nach Anspruch 1, **dadurch gekennzeichnet, dass** der lineare Wärmeausdehnungskoeffizient gemessen in drei aufeinander senkrecht stehenden Raumrichtungen x, y und z um höchstens 19 %, bezogen auf den niedrigsten Wert, voneinander abweicht.

6. Verfahren zur Herstellung von Carbidkeramik-Werkstoff nach Anspruch 1, umfassend die Schritte
- Zerkleinern von Filzen auf Basis von Kohlenstoff oder Graphitfasern oder deren Vorläufern auf eine Teilchengröße von maximal 10 mm,
- Mischen des zerkleinerten Filzes aus dem vorigen Schritt mit carbonisierbaren Kunststoffen und/oder Kunstharzen und/oder Pechen und/oder carbidbildenden Stoffen,
- Pressen der im vorigen Schritt hergestellten Mischung zu einem Formkörper,
- Carbonisieren des Formkörpers durch Erhitzen unter Ausschluss von oxydierenden Agenzien bei Temperaturen von 750 bis 1300 °C
- Infiltrieren des im vorigen Schritt gebildeten Körpers mit der Schmelze eines carbidbildenden Elements oder einer Mischung von zwei oder mehreren solcher Elemente bei einer Temperatur oberhalb von der Schmelztemperatur des betreffenden Elements oder der betreffenden Mischung von carbidbildenden Elementen, oder dem Dampf eines carbidbildenden Elements oder einer Mischung von zwei oder mehreren solcher Elemente bei einer Temperatur oberhalb von der Verdampfungstemperatur des betreffenden Elements oder der betreffenden Mischung von carbidbildenden Elementen, und Reaktion zumindest eines Teils des Kohlenstoffs in dem gemäss dem vorigen Schritt gebildeten Körper mit dem carbidbildenden Element oder mindestens einem der carbidbildenden Elemente unter Bildung des betreffenden Carbids.

7. Verfahren nach Anspruch 6, **dadurch gekennzeichnet, dass** als carbidbildendes Element Silicium eingesetzt wird.

8. Verfahren nach Anspruch 6, **dadurch gekennzeichnet, dass** die Filze vor dem Zermahlen mit Lösungen von Phenolharzen imprägniert und anschließend gehärtet werden.

9. Verfahren nach Anspruch 6, **dadurch gekennzeichnet, dass** die gepressten Formkörper so durch Pressen oder Nachbearbeiten vor dem Carbonisieren oder dem Infiltrieren so gestaltet werden, dass ihre Form möglichst genau der Form des herzustellenden Werkstücks oder Bauteils entspricht.

10. Verwendung von Carbidkeramik-Werkstoffen gemäss Anspruch 1 zur Herstellung von Bauteilen mit hoher Steifigkeit und niedriger Anisotropie, insbesondere Trägern für Reflektoren.

## Claims

1. Carbide ceramic material having a density of 2400 to 3000 kg/m³, comprising phases of carbon, carbide-forming elements and carbides, the material having a mass fraction of carbon of 1% to 59%, a mass fraction of carbide-forming elements of 1 % to 30% and a mass fraction of carbides of 40% to 98%, the sum of the mass fractions of the stated constituents being 100%, and a mass fraction of at least 30% of the carbon is in the form of ground carbon fibres, bound, prior to grinding, in the form of a felt, and having an average length of up to 10 mm.

2. Carbide ceramic material according to Claim 1, **characterized in that** the average linear thermal expansion coefficient in the range from 1 to 100 K is not more than 3.5 × 10⁻⁶ K⁻¹.

3. Carbide ceramic material according to Claim 1, **characterized in that** the flexural modulus measured in three directions in space that are in each case perpendicular to one another differs by not more than 30%, relative to the lowest value measured.

4. Carbide ceramic material according to Claim 1, **characterized in that** the thermal conductivities measured in three directions in space that are perpendicular to one another, x, y and z, differ from one another by not more than 20%, relative to the lowest value.

5. Carbide ceramic material according to Claim 1, **characterized in that** the linear thermal expansion coefficients measured in three directions in space that are perpendicular to one another, x, y and z, differ from one another by not more than 19%, relative to the lowest value.

6. Method for producing carbide ceramic material according to Claim 1, comprising the steps of
- comminuting felts based on carbon fibres or graphite fibres or precursors thereof to a particle size of not more than 10 mm,
- mixing the comminuted felt from the preceding step with carbonizable plastics and/or synthetic resins and/or pitches and/or carbide-forming substances,
- compressing the mixture produced in the preceding step to form a shaped body,
- carbonizing the shaped body by heating in the absence of oxidizing agents at temperatures from 750 to 1300°C,
- infiltrating the body formed in the preceding step with the melt of a carbide-forming element or mixture of two or more such elements at a temperature above the melting temperature of the said element or said mixture of carbide-forming elements, or with the vapour of a carbide-forming element or mixture of two or more such elements at a temperature above the evaporation temperature of the said element or said mixture of carbide-forming elements, and reacting at least some of the carbon in the body formed in accordance with the preceding step with the carbide-forming element or with at least one of the carbide-forming elements, to form the associated carbide.

7. Method according to Claim 6, **characterized in that** silicon is used as carbide-forming element.

8. Method according to Claim 6, **characterized in that** the felts, prior to comminution by grinding, are impregnated with solutions of phenolic resins and subsequently cured.

9. Method according to Claim 6, **characterized in that** the compressed shaped bodies are formed in such a way, by compression or afterworking prior to carbonization or infiltration, that their shape corresponds as precisely as possible to the shape of the workpiece or component to be produced.

10. Use of carbide ceramic materials according to Claim 1 for producing components with high stiffness and low anisotropy, more particularly carriers for reflectors.

## Revendications

1. Matériau céramique à base de carbures ayant une densité de 2 400 à 3 000 kg/m³*,* contenant des phases de carbone, d'éléments formant des carbures et de carbures, la proportion en masse du carbone dans le matériau étant de 1 à 59 %, la proportion en masse des éléments formant des carbures étant de 1 à 30 % et la proportion en masse des carbures étant de 40 à 98 %, et la somme des proportions en masse des constituants cités étant de 100 %, au moins une proportion en masse de 30 % du carbone se présentant sous la forme de fibres de carbone broyées, reliées en un feutre avant le broyage, d'une longueur moyenne inférieure ou égale à 10 mm.

2. Matériau céramique à base de carbures selon la revendication 1, **caractérisé en ce que** le coefficient d'expansion thermique linéaire moyen dans la plage allant de 1 à 100 K est d'au plus 3,5 x 10⁻⁶ K⁻¹.

3. Matériau céramique à base de carbures selon la revendication 1, **caractérisé en ce que** les modules de flexion mesurés dans trois dimensions de l'espace à chaque fois perpendiculaires les unes aux autres diffèrent d'au plus 30 %, par rapport à la valeur minimale mesurée.

4. Matériau céramique à base de carbures selon la revendication 1, **caractérisé en ce que** les conductivités thermiques mesurées dans trois directions de l'espace x, y et z perpendiculaires les unes aux autres diffèrent les unes des autres d'au plus 20 %, par rapport à la valeur la plus faible.

5. Matériau céramique à base de carbures selon la revendication 1, **caractérisé en ce que** les coefficients d'expansion thermique linéaires mesurés dans trois directions de l'espace x, y et z perpendiculaires les unes aux autres diffèrent les uns des autres d'au plus 19 %, par rapport à la valeur la plus faible.

6. Procédé de fabrication d'un matériau céramique à base de carbures selon la revendication 1, comprenant les étapes suivantes :
- le broyage de feutres à base de fibres de carbone ou de graphite ou leurs précurseurs à une taille de particule d'au plus 10 mm,
- le mélange du feutre broyé de l'étape précédente avec des plastiques carbonisables et/ou des résines synthétiques et/ou des asphaltes et/ou des substances formant des carbures,
- la compression du mélange fabriqué à l'étape précédente en un corps moulé,
- la carbonisation du corps moulé par chauffage avec élimination d'agents oxydants à des températures de 750 à 1 300 °C,
- l'infiltration du corps formé à l'étape précédente avec la masse fondue d'un élément formant des carbures ou d'un mélange de deux de ces éléments ou plus à une température supérieure à la température de fusion de l'élément en question ou du mélange en question d'éléments formant des carbures, ou avec la vapeur d'un élément formant des carbures ou d'un mélange de deux de ces éléments ou plus à une température supérieure à la température de vaporisation de l'élément en question ou du mélange en question d'éléments formant des carbures, et la mise en réaction d'au moins une partie du carbone contenu dans le corps formé selon l'étape précédente avec l'élément formant des carbures ou au moins un des éléments formant des carbures pour former le carbure en question.

7. Procédé selon la revendication 6, **caractérisé en ce que** le silicium est utilisé en tant qu'élément formant des carbures.

8. Procédé selon la revendication 6, **caractérisé en ce qu'**avant le broyage, les feutres sont imprégnés avec des solutions de résines de phénol, puis durcis.

9. Procédé selon la revendication 6, **caractérisé en ce que** les corps moulés comprimés sont façonnés par compression ou usinage secondaire avant la carbonisation ou l'infiltration de manière à ce que leur forme corresponde aussi précisément que possible à la forme de la pièce ou de l'élément à fabriquer.

10. Utilisation de matériaux céramiques à base de carbures selon la revendication 1 pour la fabrication d'éléments ayant une rigidité élevée et une faible anisotropie, notamment de supports pour réflecteurs.
